# EUROPEAN PATENT APPLICATION

(11) **EP 4 525 240 A1**
(43) Date of publication of application: **19.03.2025**
(21) Application number: 23197438.7
(22) Date of filing: 14.09.2023
(51) Int. Cl.: H02H 9/00, H02H 7/16

(54) **METHOD AND CIRCUIT FOR PROTECTING A GRID FILTER OF A WIND TURBINE**

(71) Applicant: Siemens Gamesa Renewable Energy A/S, 7330 Brande (DK)
(72) Inventor: Trintis, Ionut, 8752 Østbirk (DK)
(74) Representative: SGRE-Association

(57) **Abstract**

It is described a method and a circuit for protecting a grid filter (10) of a wind turbine (1). The grid filter (10) is arranged in a circuit between a generator (5) of the wind turbine (1) and a grid (11). The wind turbine (1), an AC/DC-converter (24), a DC/AC-converter (12), a grid switch (13) and the grid (11) are serially connected, wherein a DC-link capacitor (14) is connected in parallel between the AC/DC-converter (24) and the DC/AC-converter (12). The grid filter (10) is connected in parallel at a connection point (15) between the DC/AC-converter (12) and the grid switch (13). The grid switch (13) is bypassed by or connected in parallel to a pre-charging resistor (16) and a pre-charging switch (17), wherein the pre-charging resistor (16) is connected to the connection point (15).

## Description

### Field of invention

The present invention relates to a method and a circuit for protecting a grid filter of a wind turbine.

In the prior art, there are two main problems that are overcome by the present invention.

First, an inrush current into the wind turbine grid filter capacitors usually occurs, which is very high and stresses the grid filter capacitors and affiliated components such as contactors, fuses, conductors every time the grid converter is energized. There are also grid voltage disturbances every time the wind turbine filter is energized, which is desirable to be eliminated.

Second, a grid filter contactor to keep the grid filter disconnected from the circuit during a converter DC-link energization is needed in the prior art, in order to limit the current and energy through a pre-charge circuit.

Until now, the problem of the high inrush current in the grid filter capacitors has been solved by firstly energizing DC-link capacitors, which are in included in AC/DC- and DC-AC-converters, by use of a complex and expensive circuitry. Then, a grid converter was used to energize the grid filter capacitors before connecting it to the grid.

To avoid such expensive DC-energization circuit, it is conceivable to disconnect the grid filter from the main circuit during an AC side energization of the DC-link via limiting pre-charge resistors. The disconnection can be realized with a grid filter contactor, which helps limiting a rating of the pre-charge circuitry since the pre-charge circuitry will not be conducting reactive current consumed by the grid filter during pre-charge of the DC-link capacitors with active power from the grid. However, when the grid filter is then connected to the grid, the capacitor voltage is first 0 V and then connected to the high grid voltage of about 700 V (which may fluctuate with ± 15 %), which would create a large inrush current.

### Summary of the Invention

There may be a need for a method and a circuit for protecting a grid filter of a wind turbine. This need may be met by the subject matters according to the independent claims. The present invention is further developed as set forth in the dependent claims.

According to a first aspect of the invention, a method of protecting a grid filter of a wind turbine is provided. The grid filter is arranged in a circuit between a generator of the wind turbine and a grid. In the circuit, the wind turbine, an AC/DC-converter, a DC/AC-converter, a grid switch and the grid are serially connected, wherein a DC-link capacitor is connected in parallel between the AC/DC-converter and the DC/AC-converter. The grid filter is connected in parallel at a connection point between the DC/AC-converter and the grid switch. The grid switch is bypassed by or connected in parallel to a pre-charging resistor and a pre-charging switch , the pre-charging resistor being connected to the connection point. The method comprising steps of:
measuring a grid voltage, while the grid switch is opened;
synchronizing the DC/AC-converter to the measured grid voltage;
closing the pre-charging switch to pre-charge the DC-link capacitor;
measuring a voltage at the DC-link capacitor and waiting, till the voltage at the DC-link capacitor reaches a predetermined pre-charge voltage;
then controlling an AC-voltage of the DC/AC-converter in an open loop control by using the measured grid voltage as a set point;
supplying reactive power from the DC/AC-converter or DC link capacitor to the grid filter;
charging the DC-link capacitor to a predetermined charge voltage; and
then closing the grid switch.

In the context of the present invention, the term "switch" can be a mechanical switch such as a breaker or a contactor, or it can be an electronic switch such as a semiconductor switch.

For a proper operation, the DC-link capacitor is gradually pre-charged in order to avoid damages to the electrical circuit. After pre-charging, the DC/AC-converter is controlled to finally charge the DC-link capacitor to initiate a controlled rectification.

The present invention introduces the following features. First, a grid filter contactor is omitted from the circuit, which means the grid filter will always be connected in the circuit to the converter AC power line. At the flip side, reactive power is supplied from the DC/AC-converter or DC link capacitor to the grid filter to compensate for a grid filter reactive power generation while being connected to the grid, when the wind turbine does not produce power, if it is desired by the wind turbine park controller to operate the wind turbine at a unity power factor at all times. Alternatively, the wind turbine will be seen by the park/grid as a capacitor which generates a certain amount of reactive power to be compensated somewhere else in the network, e.g., by another wind turbine already in operation and producing active and reactive power.

Second, a predetermined pre-charge control sequence is introduced, which uses the converters to nearly cancel the reactive power drawn from the grid during the pre-charge sequence trough the pre-charge resistors. Here, the converters, which have access to the grid voltage, can be synchronized with the grid voltage, and when the DC-link of the converter is pre-charged via the pre-charging resistor to a minimum voltage, for instance of about 20 VDC, the converter can start switching and start to produce an AC voltage itself by switching in an open loop sequence, at which point the reactive power drawn by the grid filter will be delivered from the DC-link capacitors instead of being drawn from the grid via the pre-charging resistor.

In this way, the pre-charging of the grid filter is slow and smooth, thereby avoiding high inrush currents. At the same time, the resistive pre-charge circuit used to deliver the reactive power to the DC-link capacitor for energization the same is maintained at a low rating, which is usually used when the grid filter is kept disconnected from the circuit during the pre-charge sequence.

In the present invention, the grid filter is connected during pre-charging through the pre-charging resistor and also during charging the converters so that the grid filter experiences a slow and smooth increase of stress. By contrast, the prior art grid filter is immediately connected from 0 V to the final grid voltage which causes the high inrush current and stresses the prior art grid filter accordingly.

If is it required that the turbine is net neutral with respect to a reactive power export during periods of no power production, in special cases when the converter is not completely disconnected from the grid by the grid switch, the converter can locally compensate for a filter reactive power generation.

As a result, the present invention provides lower costs of the converter by eliminating the prior art grid filter contactor or switch. Lower stresses of grid filter components due to the elimination of the inrush current can be expected, which concerns capacitors, fuses, cable and busbars. A higher converter reliability can be achieved due to a smaller number of components and reduced electrical stresses on the grid filter components.

In addition, grid disturbances during wind turbine grid connection and energization can be reduced since the inrush current from the grid is eliminated. The whole converter can be energized at very low currents drawn from the grid.

In an embodiment, in the step of controlling the AC-voltage of the DC/AC-converter in the open loop control by using the grid voltage as a set point, limited reactive power from the grid is supplied to the grid filter. That means, almost the entire reactive power is supplied from the DC/AC-converter or DC link capacitor to the grid filter.

In an embodiment, in the step of controlling the AC-voltage of the DC/AC-converter in the open loop control by using the measured grid voltage as a set point, the AC-voltage of the DC/AC-converter is modulated, preferably with a high as possible modulation index, preferably by overmodulation.

In an embodiment, the grid voltage is measured by a voltage transducer which is connected between the grid switch and a turbine transformer, wherein the turbine transformer transforms the grid voltage to a high voltage.

In an embodiment, an overvoltage protector is connected between the pre-charge resistor and the grid. In case of an overvoltage condition, an auxiliary switch, which is connected between the grid and the pre-charging resistor, can be opened to protect the circuit.

In an embodiment, the pre-charge voltage is 20 V DC or higher. The pre-charge voltage is predetermined by the used transistor technology, since there must be a higher DC-link voltage compared to a transistor gate driver power supply voltage level to avoid charging the DC-link capacitor from a gate driver to not affect a gate driver's lifetime. In an embodiment, the predetermined charge voltage is between the pre-charge voltage and a fully rectified grid voltage. It turned out that these values are most effective for performing the method and for properly operating the converters.

According to a second aspect of the invention, a circuit for protecting a grid filter of a wind turbine is provided. The grid filter is arranged in a circuit between a generator of the wind turbine and a grid. The circuit is configured to perform the above described method. In the circuit, the wind turbine, an AC/DC-converter, a DC/AC-converter, a grid switch and the grid are serially connected, wherein a DC-link capacitor is connected in parallel between the AC/DC-converter and the DC/AC-converter. The grid filter is connected in parallel at a connection point between the DC/AC-converter and the grid switch. The grid switch is bypassed by or connected in parallel to a pre-charging resistor and a pre-charging switch, the pre-charging resistor being connected to the connection point.

In an embodiment, the grid filter includes a capacitor bank, an LC circuit or an RLC circuit, which is connected in series or in a series-parallel configuration.

In an embodiment, the grid filter is connected to the connection point by means of a grid filter switch, which is kept closed when the method according to any one of claims 1 to 7 is performed.

In an embodiment, the grid voltage is measured by a voltage transducer.

In an embodiment, one or more fuses are connected between the voltage transducer and the grid, between the pre-charge resistor and the DC/AC-converter, and/or between the overvoltage protector and the grid. The fuses are appropriately arranged to protect the circuit.

In an embodiment, a generator switch is connected between the generator and the AC/DC-converter. For example, in case of a wind turbine disturbance, the same can be disconnected from the circuit.

According to a third aspect of the invention, a wind turbine comprising the above described circuit.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and the different elements thereof;
- Fig. 2: shows a circuit according to an embodiment; and
- Fig. 3: shows a circuit according to another embodiment.

### Detailed Description

The illustrations in the drawings are schematically. It is noted that in different figures, similar or identical elements are provided with the same reference signs.

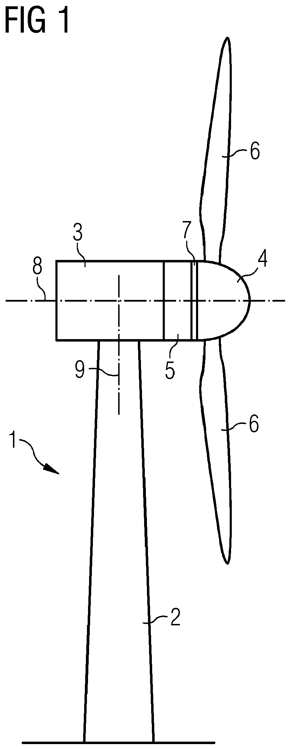

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as a yaw axis 9.

The wind turbine 1 also comprises a rotor 4 with three rotor blades 6 (of which two rotor blades 6 are depicted in Fig. 1). Each blade 6 is configured to be pitched by a pitch angle about a pitch axis of the blade 6. The rotor 4 is mounted rotatable about a rotation axis 8 (rotor axis) with regard to the nacelle 3 by means of a main bearing 7.

The wind turbine 1 furthermore comprises a generator 5. The generator 5 in turn comprises a rotor connecting the generator 5 with the rotor 4. If the rotor 4 is connected directly to the generator 5, the wind turbine 1 is referred to as a gearless, direct-driven wind turbine. Such a generator 5 is referred as direct drive generator 5. As an alternative, the rotor 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the rotor 4 into electrical energy in the shape of an AC power. The present invention is also applicable for generators and converters that are not installed in the nacelle 3 (in the tower 2 for example), or that are not installed in the wind turbine 1, but next to the wind turbine 1.

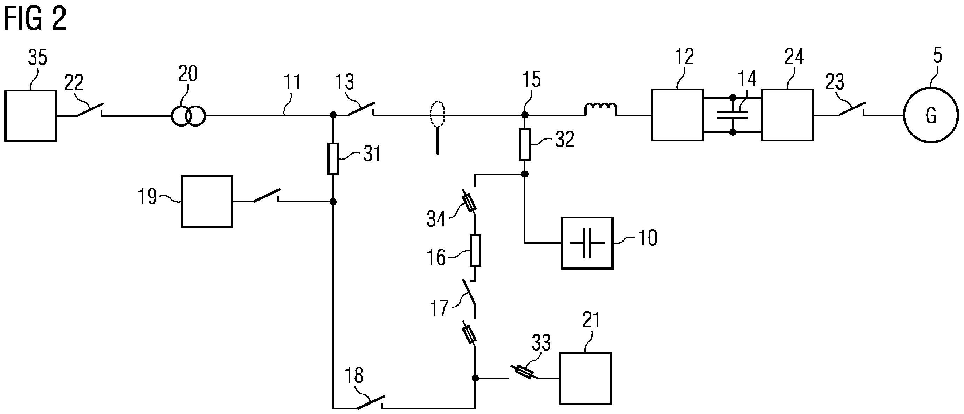

**Fig. 2** shows a circuit according to an embodiment for performing the method according to the present invention. The grid filter 10 is arranged in the circuit between the generator 5 of the wind turbine 1 and a grid 11.

The wind turbine 1, an AC/DC-converter 24, a DC/AC-converter 12, a grid switch 13 and the grid 11 are serially connected, wherein a DC-link capacitor 14 is connected in parallel between the AC/DC-converter 24 and the DC/AC-converter 12. The grid filter 10 is connected in parallel at a connection point 15 between the DC/AC-converter 12 and the grid switch 13. The grid filter 10 can be a capacitor bank, an LC circuit or an RLC circuit, which is connected in series or in a series-parallel configuration. The grid switch 13 is bypassed by or connected in parallel to a pre-charging resistor 16, a pre-charging switch 17 and an auxiliary switch 18, the pre-charging resistor 16 being connected to the connection point 15.

For a proper operation, the DC-link capacitor 14 must gradually be pre-charged in order to avoid damages of the DC-link capacitor 14 or the electrical circuit. After pre-charging, the DC/AC-converter 12 should be controlled to finally charge the DC-link capacitor 14 to initiate controlled rectification.

The method according to the embodiment comprising the steps of:

| | |
|---|---|
| step 1) | Closing the auxiliary switch 18 so that the circuit is provided with auxiliary power from the grid 11, while the grid switch 13 is opened; |
| step 2) | Measuring a grid voltage. The grid voltage can be measured by a voltage transducer 19 which is connected to the grid 11; |
| step 3) | Synchronizing the DC/AC-converter 12 to the measured grid voltage; |
| step 4) | Closing the pre-charging switch 17 to pre-charge the DC-link capacitor 14; |
| step 5) | Measuring a voltage at the DC-link capacitor 14 and waiting, till the voltage at the DC-link capacitor 14 reaches a predetermined pre-charge voltage. The pre-charge voltage is preferably 20 V DC or higher; |
| step 6) | Then controlling an AC-voltage of the DC/AC-converter 12 in an open loop control by using the measured grid voltage as a set point; |
| step 7) | Supplying reactive power from the DC/AC-converter 12 or DC link capacitor 14 to the grid filter 10; |
| step 8) | Charging the DC-link capacitor 14 to a predetermined charge voltage. The predetermined charge voltage is preferably between the pre-charge voltage and a fully rectified grid voltage; |
| step 9) | Then closing the grid switch 13; |
| step 10) | Controlling the AC-voltage of the DC/AC-converter 12 in a closed loop control instead of the open loop control. Alternatively, it is possible just to stop switching until further commands are given to start a closed loop control after some time. |

After step 10), the wind turbine 1 can be operated as usual to produce active and/or reactive power as needed.

In the present invention, the grid filter 10 is connected during pre-charging through the pre-charging resistor 16 and also during charging the converters 12, 24 so that the grid filter 10 experiences a slow and smooth increase of stress. By contrast, the prior art grid filter is immediately connected from 0 V to the final grid voltage which causes the high inrush current and stresses the prior art grid filter accordingly.

Advantageously, any grid filter contactor can be omitted from the circuit, which means the grid filter 10 will always be connected in the circuit to the AC power line of the converters. The omission of the grid filter contactor results in lower costs. At the flip side, the reactive power is supplied from the DC/AC-converter 12 or DC link capacitor 14 to the grid filter 10 to compensate for a grid filter reactive power generation while being connected to the grid 11, when the wind turbine 1 does not produce power.

Second, the predetermined pre-charge control sequence is introduced, which uses the converters 12, 24 to nearly cancel the reactive power drawn from the grid 11 during the pre-charge sequence trough the pre-charge resistor 16. Here, the converters 14, 24, which have access to the grid voltage, can be synchronized with the grid voltage, and when the DC-link 14 of the converters is pre-charged via the pre-charging resistor 16 to a minimum voltage, for instance of about 20 VDC, the converters can start switching and start to produce an AC voltage itself by switching in an open loop sequence, at which point the reactive power drawn by the grid filter 10 will be delivered from the DC-link capacitor 14 instead of being drawn from the grid 11 via the pre-charging resistor 16.

In this way, the pre-charging of the grid filter 10 is slow and smooth, thereby avoiding high inrush currents. At the same time, the resistive pre-charge circuit used to deliver the reactive power to the DC-link capacitor 14 for energization the same is maintained at a low rating, which is usually used when the grid filter 10 is kept disconnected from the circuit during the pre-charge sequence.

In addition, grid disturbances during wind turbine grid connection and energization can be reduced since the inrush current from the grid 11 is eliminated. The whole converters 12, 24 can be energized at very low currents drawn from the grid 11.

Lower stresses of grid filter components due to the elimination of the inrush current can be expected, which concerns capacitors, fuses, cable and busbars. A higher converter reliability can also be achieved due to a smaller number of components and reduced electrical stresses on the grid filter components.

In the step 6) of controlling the AC-voltage of the DC/AC-converter 12 in the open loop control by using the grid voltage as a set point, no reactive power from the grid 11 is supplied to the grid filter 10.

In the step 6) of controlling the AC-voltage of the DC/AC-converter 12 in the open loop control by using the measured grid voltage as a set point, the AC-voltage of the DC/AC-converter 12 is modulated, preferably by overmodulation.

A turbine transformer 20 is connected between the grid 11 and a high voltage grid 35 via a switch 22 and transforms the grid voltage to a high voltage. The grid voltage is measured by a voltage transducer 19 which is connected between the grid switch 13 and the turbine transformer 20.

An overvoltage protector 21 is connected between the pre-charge resistor 16 and the auxiliary switch 18. In case of overvoltage, an auxiliary switch 18, which is connected between the grid 11 and the pre-charging resistor 16, can be opened to protect the circuit.

A plurality of fuses 31, 32, 33, 34 is connected between the voltage transducer 19 and the grid 11, between the pre-charge resistor 16 and the DC/AC-converter 12, and between the overvoltage protector 21 and the auxiliary switch 18. A generator switch 23 is connected between the generator 5 and the AC/DC-converter 24.

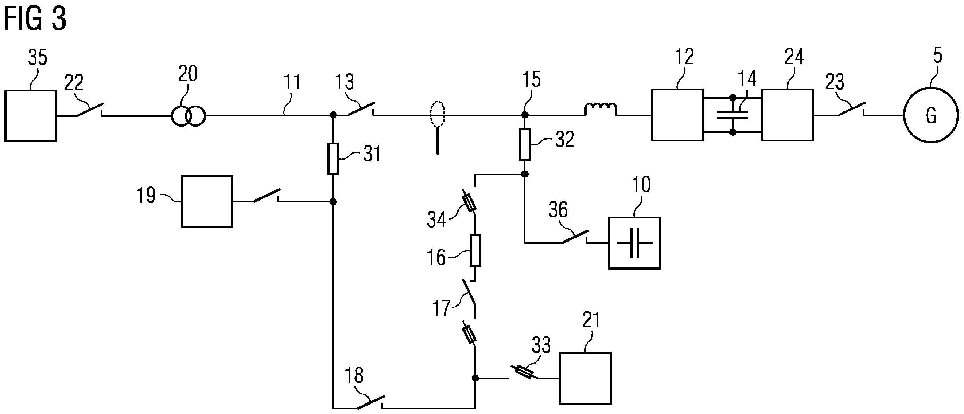

**Fig. 3** shows a circuit according to another embodiment. The circuit of Fig. 3 is similar to the circuit of Fig. 2, except for that the grid filter 10 in Fig. 3 is connected to the connection point 15 by means of a grid filter switch 36, which is kept closed when the method, which is described in the embodiment of Fig. 2, is performed. The grid filter switch 36 can be used for example for maintaining or exchanging the grid filter 10.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Independent of the grammatical term usage, individuals with male, female or other gender identities are included within the term.

## Claims

1. A method of protecting a grid filter (10) of a wind turbine (1), the grid filter (10) being arranged in a circuit between a generator (5) of the wind turbine (1) and a grid (11),
wherein in the circuit, the wind turbine (1), an AC/DC-converter (24), a DC/AC-converter (12), a grid switch (13) and the grid (11) are serially connected, wherein a DC-link capacitor (14) is connected in parallel between the AC/DC-converter (24) and the DC/AC-converter (12);
wherein the grid filter (10) is connected in parallel at a connection point (15) between the DC/AC-converter (12) and the grid switch (13);
wherein the grid switch (13) is bypassed by or connected in parallel to a pre-charging resistor (16) and a pre-charging switch (17), the pre-charging resistor (16) being connected to the connection point (15);
the method comprising steps of:
measuring a grid voltage, while the grid switch (13) is opened;
synchronizing the DC/AC-converter (12) to the measured grid voltage;
closing the pre-charging switch (17) to pre-charge the DC-link capacitor (14);
measuring a voltage at the DC-link capacitor (14) and waiting, till the voltage at the DC-link capacitor (14) reaches a predetermined pre-charge voltage;
then controlling an AC-voltage of the DC/AC-converter (12) in an open loop control by using the measured grid voltage as a set point;
supplying reactive power from the DC/AC-converter (12) or DC link capacitor (14) to the grid filter (10);
charging the DC-link capacitor (14) to a predetermined charge voltage; and
then closing the grid switch (13).

2. The method according to the preceding claim, wherein
in the step of controlling the AC-voltage of the DC/AC-converter (12) in the open loop control by using the grid voltage as a set point, no reactive power from the grid (11) is supplied to the grid filter (10).

3. The method according to any one of the preceding claims, wherein
in the step of controlling the AC-voltage of the DC/AC-converter (12) in the open loop control by using the measured grid voltage as a set point, the AC-voltage of the DC/AC-converter (12) is modulated, preferably by overmodulation.

4. The method according to any one of the preceding claims, wherein
the grid voltage is measured by a voltage transducer (19) which is connected between the grid switch (13) and a turbine transformer (20), wherein the turbine transformer (20) transforms the grid voltage to a high voltage.

5. The method according to any one of the preceding claims, wherein
an overvoltage protector (21) is connected between the pre-charge resistor (16) and the grid (11).

6. The method according to any one of the preceding claims, wherein
the pre-charge voltage is 20 V DC or higher.

7. The method according to any one of the preceding claims, wherein
the predetermined charge voltage is between the pre-charge voltage and a fully rectified grid voltage.

8. A circuit for protecting a grid filter (10) of a wind turbine (1), the grid filter (10) being arranged in a circuit between a generator (5) of the wind turbine (1) and a grid (11),
wherein the circuit is configured to perform the method according to any one of the preceding claims;
wherein in the circuit, the wind turbine (1), an AC/DC-converter (24), a DC/AC-converter (12), a grid switch (13) and the grid (11) are serially connected, wherein a DC-link capacitor (14) is connected in parallel between the AC/DC-converter (24) and the DC/AC-converter (12);
wherein the grid filter (10) is connected in parallel at a connection point (15) between the DC/AC-converter (12) and the grid switch (13);
wherein the grid switch (13) is bypassed by or connected in parallel to a pre-charging resistor (16) and a pre-charging switch (17), the pre-charging resistor (16) being connected to the connection point (15).

9. The circuit according to the preceding claim, wherein
the grid filter (10) includes a capacitor bank, an LC circuit or an RLC circuit, which is connected in series or in a series-parallel configuration.

10. The circuit according to any one of claims 8 and 9, wherein
the grid filter (10) is connected to the connection point (15) by means of a grid filter switch (36), which is kept closed when the method according to any one of claims 1 to 7 is performed.

11. The circuit according to any one of claims 8 to 10, wherein
the grid voltage is measured by a voltage transducer (19) .

12. The circuit according to any one of claims 8 to 11, wherein
one or more fuses (31, 32, 33, 34) are connected between the voltage transducer (19) and the grid (11), between the pre-charge resistor (16) and the DC/AC-converter (12), and/or between the overvoltage protector (21) and the grid (11).

13. The circuit according to any one of claims 8 to 12, wherein
a generator switch (23) is connected between the generator (5) and the AC/DC-converter (24).

14. A wind turbine (1) comprising the circuit according to any one of claims 8 to 13.
